# EUROPÄISCHE PATENTANMELDUNG

(11) **EP 1 515 003 A1**
(43) Veröffentlichungstag der Anmeldung: **16.03.2005**
(21) Anmeldenummer: 03020720.3
(22) Anmeldetag: 11.09.2003
(51) Int. Cl.: F01D 11/00, F16J 15/08

(54) **Gasturbine und Dichtungsmittel für eine Gasturbine**

(71) Anmelder: SIEMENS AKTIENGESELLSCHAFT, 80333 München (DE)
(72) Erfinder: Milazar, Mirko, 46049 Oberhausen (DE)

(57) **Zusammenfassung**

Es wird eine Gasturbine (1) mit einem drehfesten konzentrisch zum Rotor (3) angeordneten, von einem Arbeitsmedium durchströmten Innengehäuse (37) vorgestellt. Das Gehäuse besteht aus mehreren aneinandergereihten Ringen (25,26) jeweils unter Belassung eines Ringspaltes (23) zwischen zwei unmittelbar benachbarten Ringen (25,26), wobei zur Abdichtung des Ringspaltes (23) ein ringförmiges Dichtungsmittel in zumindest einer Umfangsnut (31) eingesetzt ist. Um ein Dichtungsmittel anzugeben, das eine größere Beweglichkeit der beiden den Spalt bildenden Komponenten ermöglicht, wird vorgeschlagen, dass der Ringspalt (23) jeweils aus einander überlappenden Ringen (25,26) gebildet wird und radial gesehen die Strömungsrichtung des Arbeitsfluid (20) verläuft, dass der in Strömungsrichtung gesehen jeweils vordere der beiden Ringe (25) eine Anlageringfläche (32) für das als ringförmiges Federelement (24) ausgebildete Dichtungsmittel aufweist, an der das Federelement (24) den Ringspalt (23) abdichtend vorgespannt anliegt.

## Beschreibung

Die Erfindung betrifft eine Gasturbine mit einem drehfesten konzentrisch zum Rotor angeordneten Innengehäuse und ein ringförmiges Dichtungsmittel für eine Gasturbine gemäß den Oberbegriffen der Ansprüche 1 und 12.

Aus der EP 896 128 ist ein Dichtelement für eine Gasturbine bekannt. Die Gasturbine weist einen Leitschaufelring aus benachbarten Turbinenleitschaufeln auf, die einen ringförmigen Heißgaskanal bilden. Zur inneren und äußeren Begrenzung des Heißgaskanals sind an den Turbinenschaufeln Plattformen angeordnet. Unmittelbar benachbarte Plattformen bilden mit ihren aneinanderliegenden Stirnseiten einen Spalt, der mittels eines Dichtelements abgedichtet ist. In jeder Stirnseite ist dazu jeweils eine Nut eingebracht, die einander gegenüberliegen und in die das Dichtelement eingesetzt wird. Das im Querschnitt C-förmige Dichtelement ragt jeweils mit einem der beiden gebogenen Enden derart in eine Nut hinein, dass die beiden sich quer zum Nutgrund erstreckenden Arme des Dichtelements an jeweils einer Flanke der Nut anliegen und so den Spalt zwischen den zwei benachbarten Plattformen abdichten. Das im Heißgaskanal strömende Arbeitsfluid wird so am Verlassen des Kanals durch den Spalt gehindert.

Weiter ist aus der DE 100 44 848 ein Dichtelement bekannt, welches einen zwischen zwei statischen Turbinenteilen geformten Spalt abdichtet. Das Dichtelement ist ebenfalls in zwei sich gegenüberliegenden Nuten eingesetzt, jedoch weist es im Gegensatz zu der EP 896 128 eine andere Geometrie auf. Die Wirkung und Funktion dieses Dichtelements ist zu dem vorgenannten Dichtelement identisch.

Beim Betrieb der Gasturbine treten an den heißgasbeaufschlagten Komponenten, wie den Leitschaufeln und deren Plattformen, thermische Dehnungen auf, die zu einer Verschiebung der Komponenten gegeneinander führen können.

Die bekannten Dichtelemente ermöglichen bei einer zum Spalt parallel gerichteten Scherverschiebung nur einen relativ kleinen Verschiebeweg.

Die Aufgabe der Erfindung ist es daher, ein Dichtmittel für eine Gasturbine anzugeben, die auch bei größeren Verschiebewegen wirksam ist. Ferner ist die Aufgabe, eine hierzu entsprechende Gasturbine anzugeben.

Die Aufgabe wird bezogen auf die Gasturbine durch die Merkmale des Anspruchs 1 und bezogen auf das Dichtungsmittel durch die Merkmale des Anspruchs 12 gelöst. Vorteilhafte Ausgestaltungen sind in den Unteransprüchen angegeben.

Die Lösung der Aufgabe schlägt bezogen auf die Gasturbine vor, dass der Ringspalt zwischen einander überlappenden aus Segmenten bestehenden Ringen gebildet wird, und dass der in Strömungsrichtung gesehen jeweils vordere der beiden Ringe eine Anlageringfläche für das als ringförmiges Federelement ausgebildete Dichtungsmittel aufweist, an der das Federelement den Ringspalt abdichtend vorgespannt anliegt. Dabei liegt das Federelement in Umfangsrichtung entlang einer Kontaktlinie an der Anlageringfläche an.

Beim Betrieb der Gasturbine bewegen sich aufgrund von Wärmedehnungen die beiden Ringe relativ zueinander. Diese Bewegungen sind parallel zur Anlageringfläche, senkrecht dazu oder eine Mischung aus den beiden Bewegungen. Dabei bedingt die Federvorspannung das selbsttätige Nachführen des Federelements an der Anlageringfläche, ohne dass das Federelement den Kontakt zur Anlageringfläche und so das Federelement die Dichtwirkung verliert. Es verschiebt sich lediglich die Kontaktlinie in axialer Richtung entlang der Anlageringfläche.

Aufgrund der im Querschnitt länglichen Ausgestaltung des Federelements in Verbindung mit der Federvorspannung ist eine größere Scherverschiebung der beiden Komponenten zueinander möglich.

Zweckmäßigerweise ist das Innengehäuse konisch zum Rotor in Strömungsrichtung divergierend ausgebildet.

Eine einfache Überlappung zweier benachbarter Ringe ist durch jeweils einen an den Ringen angeformten in Divergenzrichtung erstreckenden Kragen gegeben. Dabei weist der in Strömungsrichtung gesehen vordere Ring den radial innen liegenden und der hintere Ring den außen liegenden Kragen auf, so dass der Ringspalt radial gesehen gegen die Strömungsrichtung des Arbeitsfluids verläuft. Diese Anordnung erschwert das tiefere Einströmen des Heißgases in den abzudichtenden Spalt, da das Heißgas beim Eindringen durch die durch eine Biegung im rechten Winkel erzwungene Strömungsrichtungsumkehrung an kinetischer Energie verliert. Das Federelement wird so vom Heißgas lediglich mit einer geringeren radial nach außen gerichteten Kraft beaufschlagt als der Federvorspannung.

Dazu ist das feste Ende des Federelements in einer an der Stirnseite des hinteren Rings vorgesehenen Umfangsnut als Festlager eingebracht und kann durch Schweißen oder Löten gasdicht mit dem hinteren Ring verbunden werden. Bei Bewegungen bewegt sich das Federelement somit immer synchron mit dem hinteren Ring mit.

Das Federelement nutzt als Widerlager eine Abstützringfläche, die an der dem Heißgaskanal zugewandten Innenseite des außen liegenden Kragens angeordnet ist.

In einer weiteren Ausgestaltung ist die Anlageringfläche an der dem Arbeitsfluid abgewandten Seite des radial inneren Kragens und somit am vorderen Ring vorgesehen. Das im Querschnitt S-förmige Federelement kann dann als Freilager mit seinem freien Ende an der Anlageringfläche dicht anliegen.

Besonders vorteilhaft ist die Ausgestaltung, bei der außerhalb des Innengehäuses ein Kühlmedium strömbar ist, dessen Druck größer ist als der Druck des Arbeitsfluids im Inneren des Innengehäuses und bei der die Federwirkung des Dichtmittels in Richtung des Druckgefälles verläuft. Dadurch wird die Federwirkung des Federelements durch das nicht zu vernachlässigende Druckgefälle zwischen Kühlmedium und Arbeitsfluid unterstützt. Die so erzeugte zusätzlich Anpresskraft ist von der Fläche des Federelementes, an der das Kühlmedium wirken kann, abhängig und wird mit steigendem Druckunterschied größer. Die zusätzliche Anpresskraft führt zu einer verbesserten Dichtwirkung. Selbst für den Fall, dass die Federvorspannung nachlässt, ist so eine zuverlässige Anlage des freien Endes des Federelements an der Anlageringfläche im Betrieb gewährleistet.

Die Lösung der Aufgabe schlägt bezogen auf das Dichtungsmittel vor, dass der Ringspalt zwischen einander überlappenden aus Segmenten bestehenden Ringen gebildet wird, und dass der in Strömungsrichtung gesehen jeweils vordere der beiden Ringe eine Anlageringfläche für das als ringförmiges oder ringsegmentförmiges Federelement ausgebildete Dichtungsmittel aufweist, an der das Federelement den Ringspalt abdichtend vorgespannt anliegt. Dabei liegt das Federelement in Umfangsrichtung entlang einer Kontaktlinie an der Anlageringfläche an.

Die für die Gasturbine beschriebenen Vorteile gelten dabei sinngemäß auch für das Dichtungsmittel.

Die Erfindung wird anhand von Zeichnungen erläutert. Dabei zeigen:
- FIG. 1: einen Ringspalt mit einem Dichtungsmittel,
- FIG. 2: einen Längsteilschnitt durch eine Gasturbine und
- FIG. 3: den Ringspalt gemäß FIG. 1 mit versetzten Ringen.

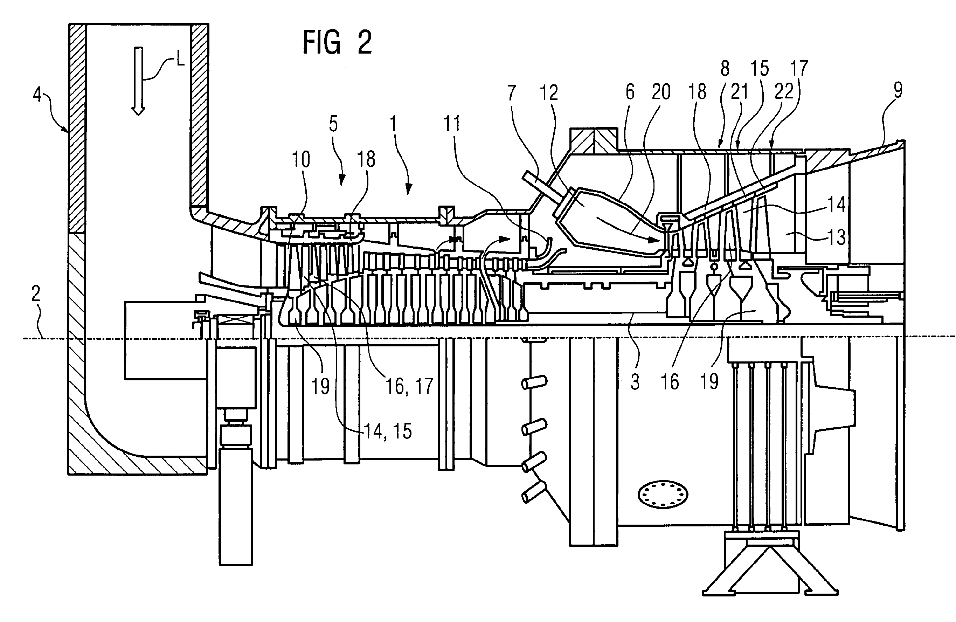

Die FIG.2 zeigt eine Gasturbine 1 in einem Längsteilschnitt. Sie weist im Inneren einen um eine Drehachse 2 drehgelagerten Rotor 3 auf, der auch als Turbinenläufer oder Rotorwelle bezeichnet wird. Entlang des Rotors 3 folgen ein Ansauggehäuse 4, ein Verdichter 5, eine torusartige Ringbrennkammer 6 mit mehreren koaxial angeordneten Brennern 7, eine Turbine 8 und das Abgasgehäuse 9 aufeinander.

Im Verdichter 5 ist ein ringförmiger Verdichterkanal 10 vor gesehen, der sich in Richtung der Ringbrennkammer 6 im Querschnitt verjüngt. Am brennkammerseitigen Ausgang des Verdichters 5 ist ein Diffusor 11 angeordnet, der mit der Ringbrennkammer 6 in Strömungsverbindung steht. Die Ringbrennkammer 6 bildet einen Verbrennungsraum 12 für ein Gemisch aus einem Brennmittel und verdichteter Luft. Ein Heißgaskanal 13 ist mit dem Verbrennungsraum 12 in Strömungsverbindung, wobei dem Heißgaskanal 13 das Abgasgehäuse 9 nachgeordnet ist.

Im Verdichterkanal 10 und im Heißgaskanal 13 sind jeweils alternierend Schaufelringe angeordnet. Es folgt einem aus Leitschaufeln 14 gebildeter Leitschaufelring 15 jeweils ein aus Laufschaufeln 16 gebildeter Laufschaufelring 17. Die feststehenden Leitschaufeln 14 sind dabei mit einem Leitschaufelträger 18 verbunden, wo hingegen die Laufschaufeln 16 am Rotor 3 mittels einer Scheibe 19 verbunden sind.

Die Leitschaufeln 14 sind am Leitschaufelträger 18 befestigt und weisen an ihrem dem Leitschaufelträger 18 zugewandten Ende Plattformen 21 auf, die den Heißgaskanal 13 nach außen hin begrenzen. Zu den Plattformen 21 der Leitschaufeln 14 sind in Strömungsrichtung Führungsringe 22 benachbart angeordnet, die den Spitzen der Laufschaufeln 16 gegenüberliegen und den Heißgaskanal 13 begrenzen. Die Plattformen 21 der einzelnen Leitschaufeln 14 eines Leitschaufelrings 15 bilden dabei einen Ring 25, der dem aus Segmenten bestehenden Führungsring 22 benachbart ist und zwischen denen ein Ringspalt 23 eingeschlossen ist. Der Führungsring 22 und der Plattformring bilden dabei ein Innengehäuse 37 für das durch die Ringe strömende Arbeitsfluid 20.

Während des Betriebes der Gasturbine 1 wird vom Verdichter 5 durch das Ansauggehäuse 4 Luft 21 angesaugt und im Verdichterkanal 10 verdichtet. Eine am brennerseitigen Ende des Verdichters 5 bereitgestellt Luft L wird durch den Diffusor 11 zu den Brennern 7 geführt und dort mit einem Brennmittel vermischt. Das Gemisch wird dann unter Bildung eines Arbeitsfluids 20 im Verbrennungsraum 10 verbrannt. Von dort aus strömt das Arbeitsfluid 20 in den Heißgaskanal 13. An den in der Turbine 8 angeordneten Leitschaufeln 14 und an den Laufschaufeln 16 entspannt sich das Arbeitsfluid 20 impulsübertragend, so dass der Rotor 3 angetrieben wird und mit ihm eine an ihn angekoppelte Arbeitsmaschine (nicht dargestellt).

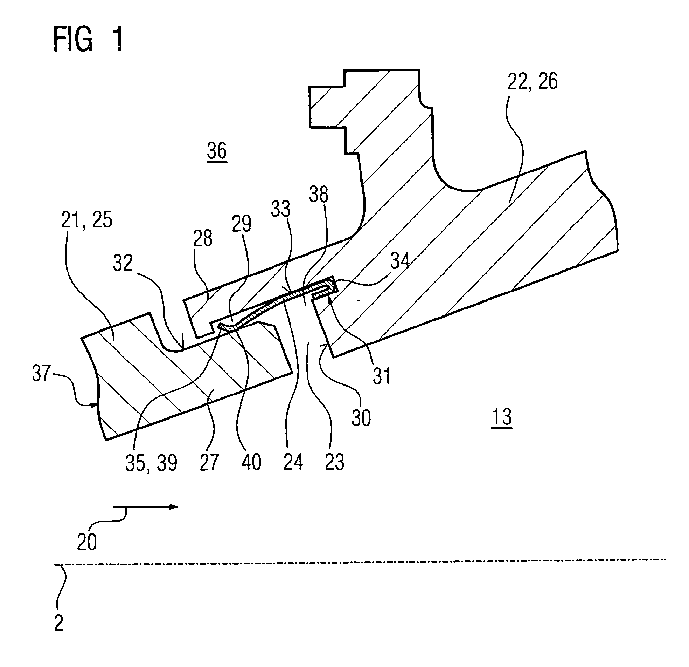

FIG. 1 zeigt einen Ausschnitt aus der Gasturbine 1 mit einem Ringspalt 23. Der Ringspalt 23 ist dabei zwischen der Plattform 21 der Leitschaufel 14 und dem Führungsring 22 ausgebildet. In FIG. 1 sind nur die für die Erfindung wesentlichen Komponenten dargestellt, d.h. auf die Darstellung von Leitschaufeln 14 und Laufschaufeln 16 sowie auf die Befestigung des Führungsringes 22 und der Plattform 21 wird verzichtet.

In Strömungsrichtung des Arbeitsfluids 20 gesehen bilden die Plattformen 21 den vorderen Ring 25 und der Führungsring 22 den hinteren Ring 26. Am vorderen Ring 25 ist radial innen liegend ein erster Kragen 27 angeformt, der sich in Richtung des nachgeschalteten hinteren Rings 26 entlang des konischen Verlaufs des Heißgaskanals 13 erstreckt. Am hinteren Ring 26 ist radial außen ein weiterer Kragen 28 angeformt, der den ersten Kragen 27 radial von innen nach außen gesehen überlappt, so dass der Ringspalt 23 im Querschnitt als Überlappungsspalt geformt ist. Ein Überlappungsspalt bei der der radial äußere Kragen 28 am vorderen Ring 25 und der innere Kragen 27 am hinteren Ring 26 angeordnet ist, wäre selbstverständlich auch möglich.

Entlang des Ringspalts 23 von innen nach außen betrachtet weist dieser zunächst einen in Radialrichtung verlaufenden Spaltabschnitt auf, der durch den äußeren Kragen 28 in einer Biegung 38 umgelenkt wird, so dass sich daran ein Spaltabschnitt 29 in Axialrichtung anschließt, der sich entgegen der Strömungsrichtung des Arbeitsfluids 20 erstreckt. Danach erfolgt eine zweite Biegung, die den Ringspalt 23 wieder in Radialrichtung umlenkt.

An der dem Arbeitsfluid 20 abgewandten Seite des ersten Kragens 27 ist eine Anlageringfläche 32 angeordnet. Der Anlageringfläche 32 gegenüberliegend befindet sich am äußeren Kragen 28 die Abstützringfläche 33.

In der dem vorderen Ring 25 zugewandten Stirnseite 30 des hinteren Rings 26 ist eine Umfangsnut 31 vorgesehen.

Das feste Ende 34 des Federelements 24 ist umgebördelt und in die Umfangsnut 31 eingesteckt. Dabei kann die Umfangsnut 31 in ihrer Breite etwas kleiner sein als die doppelte Materialstärke des Federelements 24, um eine gut anliegende und sichere Verbindung mit dem hinteren Ring 26 zu erreichen. Gleichfalls kann das Federelement 24 in der Umfangsnut 31 mit dem hinteren Ring 26 verlötet bzw. verschweißt sein.

Vom festen Ende 34 aus formt das Federelement 24 im Querschnitt einen leicht konvexen Bogen, der sich an der Abstützringfläche 33 abstützt. Dadurch wird eine Vorspannung im Federelement 24 erzeugt, die in Richtung der Anlageringfläche 32 gerichtet ist.

An den konvexen Bogen des Federelements 24 schließt sich ein durch einen konkaven Bogen 39 gebildetes freies Ende 35 an. Um eine gute Verschiebbarkeit des freien Endes 35 an der Anlageringfläche 32 zu erreichen, liegt der konkave Bogen 39 des Federelements 24 entlang einer in Umfangsrichtung gerichteten Kontaktlinie 40 an der Anlageringfläche 32 Luftdicht an.

Ein durch die Ringe 25, 26 vom Heißgaskanal 13 abgetrennter Rückraum 36 wird durch das an den beiden Ringen 25, 26 anliegende ebenfalls als Ring aus Segmenten ausgebildete Federelement 24 vom Heißgaskanal 13 luftdicht getrennt.

Zur Kühlung der mit dem heißen Arbeitsfluid 20 beaufschlagten Ringe 25, 26 oder Ringsegmente strömt im Rückraum 36 ein Kühlfluid, dessen Druck höher ist als der des Arbeitsfluids 20. Die Vorspannung des Federelements 24 wird durch die vom Druckgefälle erzeugte Kraft unterstützt, so dass das Federelement 24 noch stärker an die Anlageringfläche 32 anpresst wird. Eine geringe Kühlfluidauströmung infolge nicht auszuschließender Positionsabweichungen zwischen einzelnen Segmenten eines Ringes oder infolge einer Oberflächenrauhigkeit der Anlageringfläche 32 dient zur Kühlung des Federelements 24.

Das Federelement 24 kann dabei aus einer hitzebeständigen Legierung hergestellt sein, beispielsweise aus einer Legierung mit dem Handelsnamen Nimonic 90.

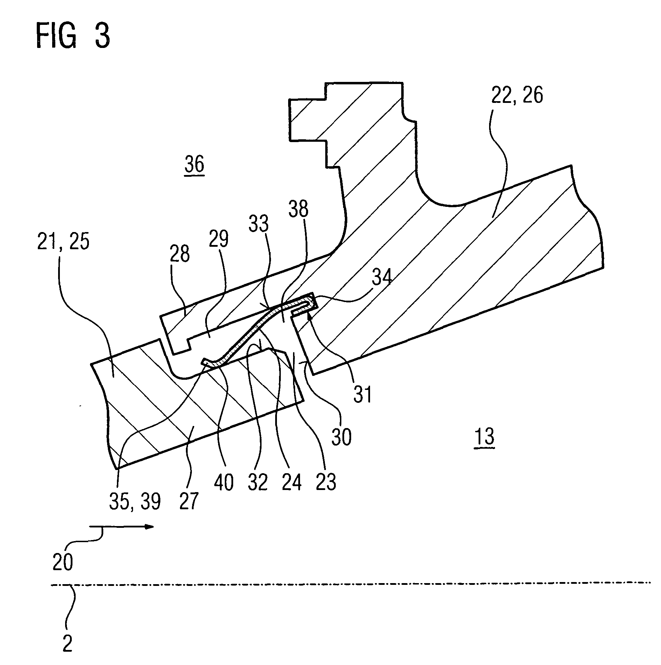

FIG. 3 zeigt die beiden Ringe 25, 26 nach erfolgter thermischer Ausdehnung in einer zueinander verschobenen Position. Bezogen auf FIG. 1 ist die Länge der Spaltabschnitt 29 in Strömungsrichtung des Arbeitsfluids 20 gesehen verkürzt, wobei jedoch der Abstand der beiden Kragen 27, 28 bzw. der Abstand der Anlageringfläche 32 zur Abstützringfläche 33 gegenüber FIG. 1 sich vergrößert hat. Bezogen auf den Rotor 3 sind die beiden den Ringspalt 23 bildenden Ringe 25, 26 sowohl in Radialrichtung als auch in Axialrichtung zueinander verschoben.

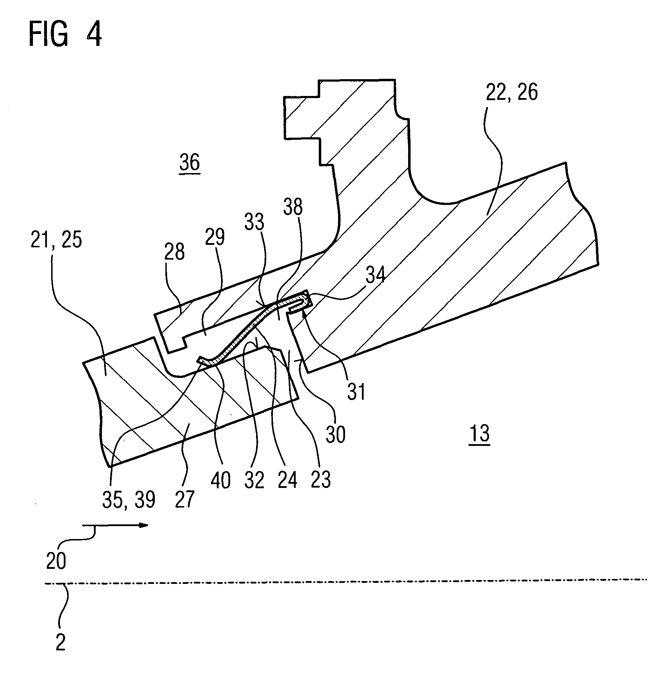

Alternativ zu Fig. 3 zeigt Fig.4 ein durch das Anstemmen der Umfangsnut 31 gelenkartig eingeklemmtes Federelement 24, so dass eine geringe Beweglichkeit des Federelements 24 nach Art eines Scharniers gegeben ist.

Durch die Federvorspannung bleibt das freie Ende 35 des Federelements 24 mit der Anlageringfläche 32 trotz des großen Verschiebeweges in Kontakt und dichtet so den Rückraum 36 gegenüber dem Heißgaspfad 13 ab. Geringe Leckageströme des Kühlfluids durch den Ringspalt 23 in den Heißgaskanal hinein sind dabei möglich, wobei gegenüber dem Stand der Technik weiterhin eine Verbesserung der Dichtwirkung und eine Verminderung der Leckage erzielt wird.

Durch die ringförmige Anordnung der Plattformen 21 und Führungsringe 22 und durch die erforderliche radiale Montage dieser Komponenten sind mit den in der Beschreibung und Ansprüchen beschriebenen Plattformen 21, Leitschaufelringe 15, Ringe 22, 25, 26 als auch Federelemente 24 jeweils nur Segmente des jeweiligen Ringes zu verstehen.

Ferner kann das vorgeschlagene Dichtungsmittel sowohl zwischen benachbarten Plattformen eines einzelnen Schaufelringes als auch in anderen Bereichen der Gasturbine z.B. in der Brennkammer eingesetzt werden, wenn zwischen den abzudichtenden Komponenten ein Überlappungsspalt gebildet ist.

## Patentansprüche

1. Gasturbine (1) mit einem drehfesten konzentrisch zum Rotor (3) angeordneten, von einem Arbeitsmedium durchströmten Innengehäuse (37),
das aus mehreren aneinandergereihten Ringen (25, 26) jeweils unter Belassung eines Ringspaltes (23) zwischen zwei unmittelbar benachbarten Ringen (25, 26) gebildet ist,
wobei zur Abdichtung des Ringspaltes (23) ein ringförmiges Dichtungsmittel in zumindest einer Umfangsnut (31) eingesetzt ist,
**dadurch gekennzeichnet,**
**dass** der Ringspalt (23) zwischen einander überlappenden aus Segmenten bestehenden Ringen (25, 26) gebildet wird, und
**dass** der in Strömungsrichtung gesehen jeweils vordere der beiden Ringe (25) eine Anlageringfläche (32) für das als ringförmiges Federelement (24) ausgebildete Dichtungsmittel aufweist, an der das Federelement (24) den Ringspalt (23) abdichtend vorgespannt anliegt.

2. Vorrichtung nach Anspruch 1,
**dadurch gekennzeichnet,**
**dass** das Innengehäuse (37) konisch zum Rotor (3) in Strömungsrichtung divergierend ausgebildet ist.

3. Vorrichtung nach Anspruch 2,
**dadurch gekennzeichnet,**
**dass** die Überlappung zweier benachbarter Ringe (25, 26) durch jeweils einen in Divergenzrichtung erstreckenden Kragen (27, 28) gebildet ist, wobei der in Strömungsrichtung gesehen vordere Ring (25) den radial innen liegenden und der hintere Ring (26) den außen liegenden Kragen (27, 28) bildet, so dass der Ringspalt (23) radial gesehen gegen die Strömungsrichtung des Arbeitsfluid (20) verläuft.

4. Vorrichtung nach einem der Ansprüche 1 bis 3,
**dadurch gekennzeichnet,**
**dass** die Umfangsnut (31) an der Stirnseite (30) des hinteren Rings (26) vorgesehen ist.

5. Vorrichtung nach Anspruch 4,
**dadurch gekennzeichnet,**
**dass** das feste Ende (34) des Federelements (24) durch Schweißen oder Löten mit der Umfangsnut (31) dicht verbunden ist.

6. Vorrichtung nach einem der Ansprüche 3 bis 5,
**dadurch gekennzeichnet,**
**dass** der weiter außen liegende Kragen (28) an seiner der Anlageringfläche (32) zugewandten Innenseite eine Abstützringfläche (33) für das Federelement (24) aufweist.

7. Vorrichtung nach einem der Ansprüche 3 bis 6,
**dadurch gekennzeichnet,**
**dass** die Anlageringfläche (32) auf der dem Arbeitmedium abgewandten Seite des radial inneren Kragens (27) vorgesehen ist.

8. Vorrichtung nach Anspruch 7,
**dadurch gekennzeichnet,**
**dass** das im Querschnitt S-förmige Federelement (24) mit seinem dem festen Ende (34) gegenüberliegenden freien Ende (35) an der Anlageringfläche (32) dicht anliegt.

9. Vorrichtung nach Anspruch 6, 7 oder 8,
**dadurch gekennzeichnet,**
**dass** das Federelement (24) an der Abstützringsfläche (33) mit einer Federvorspannung anliegt.

10. Vorrichtung nach einem der Ansprüche 1 bis 9,
**dadurch gekennzeichnet,**
**dass** außerhalb des Innengehäuses (37) ein Kühlmedium strömbar ist, dessen Druck größer ist als der Druck im Inneren des Innengehäuses (37), und
**dass** die Federwirkung des Dichtmittels in Richtung des Druckgefälles verläuft.

11. Vorrichtung nach einem der Ansprüche 1 bis 10,
**dadurch gekennzeichnet,**
**dass** die Überlappung zweier benachbarter Ringe (25, 26) durch jeweils einen in Divergenzrichtung erstreckenden Kragen (27, 28) gebildet ist, wobei der in Strömungsrichtung gesehen vordere Ring (25) den radial außen liegenden und der hintere Ring (26) den innen liegenden Kragen (27, 28) bildet, so dass der Ringspalt (23) radial gesehen in Strömungsrichtung des Arbeitsfluid (20) verläuft.

12. Dichtungsmittel für eine Gasturbine (1), die ein drehfestes konzentrisch zu einem zum Rotor (3) angeordnetes Innengehäuse (37) aufweist,
das aus mehreren aneinandergereihten Ringen (25, 26) jeweils unter Belassung eines Ringspaltes (23) zwischen zwei unmittelbar benachbarten Ringen (25, 26) gebildet ist, durch die ein Arbeitsfluid (20) strömt,
wobei das ringförmige Dichtungsmittel in zumindest einer Umfangsnut (31) eingesetzt ist,
**dadurch gekennzeichnet,**
**dass** der Ringspalt (23) zwischen einander überlappenden Ringen (25, 26) gebildet wird, und
**dass** der in Strömungsrichtung gesehen jeweils vordere Ringe (25, 26) eine Anlageringfläche (32) für das als ringförmiges Federelement (24) ausgebildete Dichtungsmittel aufweist, an der das Federelement (24) den Ringspalt (23) abdichtend vorgespannt anliegt.

13. Dichtungsmittel nach Anspruch 12,
**dadurch gekennzeichnet,**
**dass** das feste Ende (34) des Federelements (24) durch Schweißen oder Löten mit der Umfangsnut (31) nichtlösbar verbunden ist.

14. Dichtungsmittel nach Anspruch 13,
**dadurch gekennzeichnet,**
**dass** das im Querschnitt S-förmige Federelement (24) mit seinem dem festen Ende (34) gegenüberliegenden freien Ende (35) an einer Anlageringfläche (32) eines Ringes (25, 26) luftdicht anliegt.

15. Dichtungsmittel nach Anspruch 13 oder 14,
**dadurch gekennzeichnet,**
**dass** das Federelement (24) an einer Abstützringsfläche (33) zum Erzeugen der Federvorspannung anliegt.
